# EUROPÄISCHE PATENTSCHRIFT

(11) **EP 4 143 644 B1**
(45) Veröffentlichungstag und Bekanntmachung des Hinweises auf die Patenterteilung: **01.05.2024**
(21) Anmeldenummer: 21762405.5
(22) Anmeldetag: 10.08.2021
(51) Int. Cl.: G05B 19/418, G05B 19/042, H04L 9/00, H04L 9/32

(54) **SYSTEME UND VERFAHREN ZUR DIGITALEN BEGLAUBIGUNG VON NUTZUNGSDATEN EINER AUTOMATISIERUNGSANLAGE**
SYSTEMS AND METHOD FOR DIGITALLY AUTHENTICATING USAGE DATA OF AN AUTOMATION SYSTEM
SYSTÈMES ET PROCÉDÉ DE CERTIFICATION NUMÉRIQUE DES DONNÉES UTILES D'UNE INSTALLATION D'AUTOMATISATION

(30) Priorität: 19.08.2020 EP 20191778
(43) Veröffentlichungstag der Anmeldung: 08.03.2023
(73) Patentinhaber: Siemens Aktiengesellschaft, 80333 München (DE)
(72) Erfinder: BÖLDERL-ERMEL, Wolfgang, 90530 Wendelstein (DE); ERMLER, Rene, 91058 Erlangen (DE); PFONT, Robert, 85560 Ebersberg (DE)
(74) Vertreter: Siemens Patent Attorneys
(86) Internationale Anmeldenummer: PCT/EP2021/072291
(87) Internationale Veröffentlichungsnummer: WO 2022/037999

(56) Entgegenhaltungen:
- EP-A1- 3 671 599
- US-A1- 2019 288 847
- US-A1- 2020 228 316

## Beschreibung

Die Erfindung betrifft ein System zur digitalen Beglaubigung von Nutzungsdaten einer Automatisierungsanlage.

Darüber hinaus betrifft die Erfindung ein computerimplementiertes Verfahren zur Überprüfung und vorzugsweise zur digitalen Beglaubigung von Nutzungsdaten einer Automatisierungsanlage.

Mit zunehmender Digitalisierung werden Maschinen und Geräte "smarter" und können Leistungs-, Betriebs- und Nutzungsdaten zur Verfügung stellen. Bereits heute wird diese Fähigkeit genutzt, um steuernd auf die Produktions-Effektivität von Maschine und Fabrik Einfluss zu nehmen (z.B. mittels sog. Condition Monitoring).

Im Leasing kann ein Leasingeber den Wert einer Maschine (Asset) als finanzielle Sicherheit nutzen. Erbringt er seinem Finanzregulator einen glaubwürdigen und vertrauenswürdigen Nachweis, dass die Maschine am vereinbarten Nutzungsort regulär arbeitet, dann kann er den Aufwand für Vorsorge deutlich reduzieren. Um diesen Nachweis zu verschaffen, muss der Leasinggeber seinen vertrauenswürdigen Mitarbeiter oder einen Dritten, demgegenüber der Leasinggeber vertrauen kann, entsenden, damit dieser/diese sich ein Bild vom Zustand der Maschine vor Ort machen kann. Dabei treten mehrere Probleme auf. Kann die Maschine z.B. nicht einfach und zeitnah besucht werden, kann es zur Folge haben, dass die Maschine als Sicherheit für den Leasinggeber entwertet wird. Der vertragsgemäße Zustand (die finanzielle Sicherheit) kann nur mit Kostenaufwand wiederhergestellt werden. Wenn der Leasingnehmer nach Leasingende die Maschine zurückgibt, kann der Leasinggeber diese Maschine in einem Zweitmarkt einem anderen Nutzer zum Kauf anbieten. Der andere Nutzer muss auf die Aussagen des Verkäufers zu Zustand und Abnutzung vertrauen können, was einerseits in "unvertrauten" Geschäftsbeziehungen zum Scheitern des Geschäfts führen kann. Außerdem kann der Käufer mit falschen Aussagen zum Zustand der Maschine übervorteilt werden.

Ein weiteres Bezahlmodell betrifft eine nutzungsbasierte Miete. Im Gegensatz zu zeitbasierter Miete (wie z.B. bei Wohnungsmiete) wird hier Miete bezahlt abhängig beispielsweise von Zusatzschichten, Überlastsituationen oder Leistungsindikatoren. In all diesen Fällen muss der Betreiber der Maschine auf die vor Ort unmanipuliert ermittelten Maschinendaten und der Nutzer auf eine daraus korrekt abgeleitete Abrechnung vertrauen können, die von einem unabhängigen Prüfer oder Auditor nachvollzogen werden kann.

Darüber hinaus werden Maschinen zertifiziert, um ihre regelkonforme Funktion zu belegen. Diese Regeln werden z.B. von einer Versicherungswirtschaft genutzt (z.B. Schifffahrt Approbationen), um qualitativ hochwertige Maschinen besser bewerten zu können. Sie werden aber auch von staatlichen Behörden aufgestellt und können von Land zu Land teilweise stark variieren, z.B. länderspezifische Zulassungen zur Nutzung von Funkfrequenzen, die zudem bei neuen Technologien sich in kurzen Zeitabständen ändern können. Vor diesem Hintergrund ist es notwendig, dass der Betreiber der Maschine der staatlichen Behörde einen glaubwürdigen und vertrauenswürdigen Nachweis eines regelkonformen Betriebs der Maschine erbringt.

Dokument US2019/288847 A1 offenbart die Verifizierung von Industriedaten unter Verwendung eines sicheren, Distributed-Ledger-netzwerks und verfügt über eine Verifizierungsplattform mit einem Computerprozessor zur Kennzeichnung einer Teilmenge von Industriedaten im Datenspeicher als gültig, nachdem ein Transaktionsidentifikator verwendet wurde.

Dokument EP 3 671 599 A1 beschreibt ein Distributed Ledger-Netzwerk in einer Anlage, das einen dezentralisierten Konsens über die Gültigkeit oder Ungültigkeit von Informationen erzielt, die im Distributed Ledger gespeichert sind. Die Validierung von Knoten in der Prozessanlage, die jede lokale Blockchain verwaltet, entfernt Blöcke aus der lokalen Blockchain oder schneidet Blöcke aus der lokalen Blockchain ab, die der globalen Blockchain zur Verfügung gestellt werden, wenn es sich nicht um den letzten Block handelt, um den Speicherbedarf zu verringern.

Die Aufgabe der vorliegenden Erfindung kann somit darin gesehen werden, Systeme und Verfahren bereitzustellen, die eine manipulationssichere und vertrauenswürdige Hinterlegung der relevanten Nutzungsdaten einer Automatisierungsanlage und deren Überprüfung durch einen Dritten ermöglichen.

Die Aufgabe wird mit einem System der eingangs genannten Art erfindungsgemäß dadurch gelöst, dass das System ein erstes Modul, beispielsweise ein Edge-Device oder eine Steuerung, insbesondere eine CNC-Steuerung, ein zweites Modul, beispielsweise einen zur Bildung von Prüfsummen, insbesondere von Hashwerten ausgebildeten Dienst, und ein drittes Modul, einen Prüfer bzw. eine prüfende Instanz, insbesondere einen prüfenden Dienst, wobei das erste Modul dazu konfiguriert ist, automatisierungsanlagenbezogene Daten zu erfassen, wobei die automatisierungsanlagenbezogenen Daten zumindest Betriebsdaten umfassen, wobei die Betriebsdaten in Form einer Zeitreihe vorliegen, aus den Betriebsdaten manipulationsgeschützte Nutzungsdaten in Form einer Reihe von Zeitfenster einer vorbestimmten Länge zu erzeugen, und die manipulationsgeschützten Nutzungsdaten an das zweite Modul zu übermitteln, wobei das zweite Modul dazu konfiguriert ist, zumindest einen Teil der manipulationsgeschützten Nutzungsdaten zu bestimmen, eine Prüfsumme von dem mindestens einen Teil der manipulationsgeschützten Nutzungsdaten vorzugsweise mittels einer kryptographischen Hash-Funktion zu bilden, die Prüfsumme wenigstens einem Knoten eines Distributed-Ledger-Netzwerks zu übergeben, und die manipulationsgeschützten Nutzungsdaten und vorzugsweise Information darüber, welches Verfahren zum Bilden der Prüfsumme verwendet wurde, in einem vorzugsweise sicheren Bereich außerhalb des Distributed-Ledger-Netzwerks zu hinterlegen, wobei das dritte Modul an dem Distributed-Ledger-Netzwerk teilnimmt und dazu konfiguriert ist, die manipulationsgeschützten Nutzungsdaten und vorzugsweise die Information darüber, welches Verfahren zum Bilden der Prüfsumme verwendet wurde, auf Anfrage aus dem vorzugsweise sicheren Bereich zu erhalten und anhand der Prüfsumme die Richtigkeit der manipulationsgeschützten Nutzungsdaten zu überprüfen. Dabei muss das dritte Modul nicht notwendigerweise über einen oder mehrere Knoten verfügen (i.S.v. besitzen oder administrieren). Es genügt ein Zugang und lesender Zugriff des dritten Moduls auf irgendeinen der Knoten des Distributed-Ledger-Netzwerkes.

Die Automatisierungsanlage kann beispielsweise als eine Produktions- oder Fertigungsanlage ausgebildet sein.

Die automatisierungsanlagenbezogenen Daten können außerdem Leistungsdaten umfassen, wobei das erste Modul dazu konfiguriert sein kann, basierend auf den Betriebs- und Leistungsdaten manipulationsgeschützte Nutzungsdaten zu erzeugen.

Das zweite Modul ist vorzugsweise dazu konfiguriert, aus den ihm übermittelten manipulationsgeschützten Nutzungsdaten jene Daten herauszufiltern, die für eine vordefinierte Anwendung relevant sind. Dies können beispielsweise abrechnungs-, zertifizierungs-, versicherungsrelevante Daten sein, usw.

Das erste Modul kann zusätzlich dazu konfiguriert sein, die Betriebsdaten und vorzugsweise die Leistungsdaten beispielsweise automatisierungsanlagenlokal (d.h. innerhalb der Automatisierungsanlage) sicher abzulegen.

Darüber hinaus kann das erste Modul zusätzlich dazu konfiguriert sein, die Betriebsdaten und vorzugsweise die Leistungsdaten an das zweite Modul zu übermitteln, wobei das zweite Modul zusätzlich dazu konfiguriert sein kann, die Betriebsdaten und vorzugsweise die Leistungsdaten entsprechend zu verarbeiten beispielsweise aus mindestens einem Teil der Betriebsdaten und vorzugsweise der Leistungsdaten eine Prüfsumme, zum Beispiel einen Hashwert zu bilden, und die verarbeiteten Betriebsdaten und vorzugsweise Leistungsdaten in dem Distributed-Ledger-Netzwerk abzulegen. Zusätzlich kann das zweite Modul die (nicht verarbeiteten) Betriebsdaten und vorzugsweise Leistungsdaten in einem vorzugsweise sicheren Bereich außerhalb des Distributed-Ledger-Netzwerkes hinterlegen.

Die erfindungsgemäße Verwendung von den Nutzungsdaten und vorzugsweise den Betriebs- und den Leistungsdaten ermöglicht, eine einfache Digitalisierung von jenen Prozessen durchzuführen, bei welchen die Automatisierung einer Anlage *per se* nicht im Vordergrund steht und eine aufwändige Auswertung der Nutzungsdaten nicht erforderlich ist. Prozesse dieser Art sind vorwiegend Prozesse, bei welchen verschiedene Parteien unterschiedliches wirtschaftliches Interesse haben können, und enthalten z.B. Prozesse der Finanz- und Versicherungswirtschaft aber auch rechtliche Prozesse, z.B. bei der Anwendung von länderspezifischen (ortsabhängigen) Zertifikaten.

Verwendung von dem Distributed-Ledger-Netzwerk ermöglicht außerdem eine bessere Skalierung bei der Nutzung von Maschinendaten.

Außerdem hat die Verwendung des Distributed-Ledger-Netzwerks den Vorteil, dass der Dritte nicht vertrauenswürdig sein muss. Der Dritte kann auf die Korrektheit der im Distributed-Ledger-Netzwerk, vorzugsweise in der Blockchain-Netzwerk vorliegenden Daten vertrauen, weil sie technisch bedingt praktisch nicht im Nachhinein veränderbar sind.

Im Zusammenhang mit der vorliegenden Erfindung wird unter dem Begriff "automatisierungsanlagenbezogene Daten" jene Daten verstanden, die in einem Bezug zu einer Automatisierungsanlage stehen. Dies können beispielsweise Leistungsdaten, Betriebsdaten, Prozessdaten, Daten über Standort der Anlage etc. umfassen.

Distributed-Ledger-Netzwerk wird auch Distributed-Ledger-Technologie-Netzwerk (DLT-Netzwerk) oder verteiltes auf DLT-Technologie basiertes Datenbankmanagementsystem (DBS) genannt.

Der Begriff DBS - verteilter Datenbank - kann sich im Allgemeinen auf eine dezentrale verteilte Datenbank, eine Blockchain, ein Distributed Ledger, ein verteiltes Speichersystem (engl. Distributed memory system), ein auf der Distributed-Ledger-Technologie (DLT) basiertes System (DLTS), ein Revision-Secure-Database-System, eine Cloud, einen Cloud-Service, eine Blockchain-in-a-Cloud, ein peet-to-peer Datenbanksystem, etc. Dabei können verschiedene Implementierungen einer Blockchain oder eines DLTS infrage kommen. Z.B. ist eine Blockchain oder ein DLTS denkbar, die/das mittels eines gerichteten azyklischen Graphen (DAG), eines kryptographischen Puzzles, eines Hash-Graphen oder mittels einer zumindest zwei dieser Varianten umfassenden Kombination implementiert werden. Es ist durchaus möglich, verschiedene Konsensusalgorithmen (engl. consensus algorithms) zu implementieren. Beispielsweise kann ein Konsensusalgorithmus mittels eines kryptographischen Puzzles, einer Gossip-about-Gossip-Methode, einer Virtual-Voting-Methode oder einer Kombination davon implementiert werden. Wenn beispielsweise eine Blockchain verwendet wird, kann dies insbesondere eine Bitcoin-basierte Implementierung oder eine Ethereum-basierte Implementierung sein. Der Begriff "verteilte Datenbank" kann sich auch auf ein DBS beziehen, bei welchem zumindest ein Teil seiner Knoten und/oder Geräte und/oder Infrastruktur von einer Cloud implementiert sind. Beispielsweise können die entsprechenden Komponenten als Knoten/Geräte in der Cloud (z.B. als virtuelle Knoten in einer virtuellen Maschine) implementiert sein.

Es ist durchaus denkbar, die oben beschriebenen Implementierungsszenarien oder nur ihre Teilaspekte miteinander zu kombinieren. Beispielsweise kann ein Hash Graph als eine Blockchain verwendet werden, wobei die Blockchain ein Block-Batch sein kann.

Im Zusammenhang mit der vorliegenden Erfindung kann ein "Modul" von einem Prozessor und/oder einem Speicher zum Speichern von einem Programmcode implementiert sein. Ein Modul kann in einer Hardware und/oder in einer Software und/oder in einer Firmware implementiert sein. Beispielsweise kann der Prozessor dazu konfiguriert sein, die in dem Programmcode enthaltenen Befehle/Instruktionen auszuführen, die die hierin geschriebenen Verfahren oder Schritte der hierin beschriebenen Verfahren implementieren. Ein Modul kann auch als ein Knoten eines verteilten Datenbanksystems (DBS) ausgebildet sein, welches spezifische Funktionen bzw. Merkmale des entsprechenden Moduls implementiert bzw. aufweist. Die entsprechenden Module können beispielsweise als getrennte/separate/ individuelle Module implementiert sein. Die entsprechenden Module können weitere Elemente umfassen. Diese weiteren Elemente können beispielsweise eine oder mehrere Schnittstellen (beispielsweise Datenbankschnittstellen, Kommunikationsschnittstellen, wie zum Beispiel eine Netzwerkschnittstelle oder WLAN-Schnittstelle) und/oder eine Auswerteeinheit (z.B. einen Prozessor) und/oder einen Speicher. Mittels der Schnittstellen ist es möglich, Daten auszutauschen (z.B. zu erhalten, zu kommunizieren, zu übermitteln, bereitzustellen, etc.) Mittels der Auswerteeinheit ist es möglich, Daten auf einer computerimplementierten und/oder automatisierten Art und Weise zu vergleichen, zu validieren, zu verarbeiten, zuzuordnen, zu errechnen, etc. Mittels des Speichers ist es möglich, Daten auf einer computerimplementierten und/oder automatisierten Art und Weise zu speichern, abzurufen, bereitzustellen, etc. Es ist durchaus denkbar, dass mehrere Module von einem üblichen Prozessor implementiert werden.

Ein Programmcode - wie beispielsweise ein Smart-Contract - kann sich auf eine Programmanweisung (einen Programmbefehl) oder mehrere Programmanweisungen (Programmbefehle) beziehen, die in Verbindung mit der vorliegenden Offenbarung in einer oder mehreren Transaktionen gespeichert werden. Der Programmcode kann ausführbar sein und kann beispielsweise vom DBS ausgeführt werden. Dies kann beispielsweise durch eine Laufzeitumgebung, z.B. einer virtuellen Maschine, implementiert werden, wobei die Laufzeitumgebung oder der Programmcode vorzugsweise vollständig sind. Der Programmcode wird vorzugsweise von der Infrastruktur des DBS ausgeführt. Hierzu kann eine virtuelle Maschine durch die Infrastruktur des DBS implementiert werden. Es ist möglich, den Programmcode beim Validieren einer entsprechenden Transaktion auszuführen. Smart Contracts beziehen sich in der Regel nur auf das Handling des Blockchain-Relevanten Ablaufs (z.B. Bitcoin: Prüfung ob der Sender von digitaler Währung tatsächlich Zugriff auf das Konto hat, etc.)

Eine Prüfsumme, z.B. eine Datenblockprüfsumme, eine Datenprüfsumme, eine Knotenprüfsumme, eine Transaktionsprüfsumme, eine Verkettungsprüfsumme oder dergleichen, kann sich im Rahmen der vorliegenden Offenbarung auf eine kryptografische Prüfsumme oder einen kryptografischen Hash oder Hashwert beziehen. Solche Prüfsummen können insbesondere über einen Datensatz und/oder Daten und/oder eine oder mehrere Transaktionen und/oder einen Unterabschnitt eines Datenblocks bestimmt werden, z.B. den Blockkopf eines Blocks der Blockchain oder den Datenblockkopf eines Datenblocks eines DBS oder nur eines Teils der Transaktion eines Datenblocks. Eine Prüfsumme kann spezifisch durch eine Prüfsumme oder Prüfsummen oder einen Hashwert oder Hashwerte eines Hashbaums implementiert werden, z. B. einen Merkle-Baum, einen Patricia-Baum. Darüber hinaus kann eine Prüfsumme auch durch eine digitale Signatur oder einen Authentifizierungscode für kryptografische Nachrichten implementiert werden. Mit Hilfe von Prüfsummen ist es möglich, einen kryptografischen Schutz/Manipulationsschutz z.B. für Nutzungsdaten und für Transaktionen samt der zugehörigen Daten und Datensätzen auf verschiedenen Ebenen des DBS zu implementieren. Wenn beispielsweise ein höheres Maß an Sicherheit erforderlich ist, können Prüfsummen auf Transaktionsebene erstellt und validiert werden. Wenn beispielsweise ein geringeres Sicherheitsniveau erforderlich ist, können Prüfsummen auf Blockebene erstellt und validiert werden - z. B. über den gesamten Block oder nur über einen Teil des Datenblocks und/oder einen Teil der Transaktion.

Ein Smart-Contract-Prozess oder eine Smart-Contract-Funktionalität kann sich auf die Ausführung eines Programmcodes, z.B. eines Steuerbefehls, in einem Prozess mittels des DBS oder der jeweiligen Infrastruktur beziehen.

Wie oben erläutert, kann sich ein Smart-Contract auf einen ausführbaren Programmcode beziehen. Der Smart-Contract wird vorzugsweise in einer Transaktion des DBS - z.B. einer Blockchain - gespeichert, z.B. in einem Datenblock des DBS. Beispielsweise kann der Smart-Contract auf die gleiche Weise ausgeführt werden, wie dies mit Bezug auf "Programmcode" vorstehend beschrieben wurde.

Bei einer Ausführungsform kann mit Vorteil vorgesehen sein, dass die automatisierungsanlagenbezogenen Daten zusätzlich weitere Daten, beispielsweise Standort-Daten umfassen, wobei das erste Modul dazu konfiguriert ist, die weiteren Daten digital zu signieren und zu verschlüsseln und diese digital signierten und verschlüsselten weiteren Daten an das zweite Modul zu übermitteln, wobei das zweite Modul dazu konfiguriert ist, zumindest einen weiteren Teil der digital signierten und verschlüsselten weiteren Daten wenigstens einem Knoten des Distributed-Ledger-Netzwerks zu übergeben, wobei das drittel Modul dazu konfiguriert ist, die Richtigkeit des weiteren Teils der Daten zu überprüfen.

Es kann zweckmäßig sein, wenn die Betriebsdaten und vorzugsweise die Leistungsdaten vertrauenswürdig sind, insbesondere sind die Betriebsdaten und vorzugsweise die Leistungsdaten von an Werkzeugmaschinen der Automatisierungsanlage angeordneten, vorzugsweise zertifizierten Sensoren erfasst. Bei einer Ausführungsform kann es zum Beispiel vorgesehen sein, dass die Sensoren zumindest ein Zertifikat umfassen. Das Zertifikat kann beispielsweise von der Zertifizierungsstelle (engl. Certification authority) des Maschinenherstellers und/oder des Herstellers des ersten Moduls ausgestellt worden sein. In diesem Fall weisen die Sensoren eine ab Werk eindeutige ID auf. Das bringt den Vorteil, dass bereits die von den Sensoren erfassten Messwerte vertrauenswürdig sind. Vorzugsweise genügen die Betriebsdaten und vorzugsweise die Leistungsdaten einem standardisierten Daten- oder Maschinenmodell. Damit kann später bei einer Begutachtung oder Prüfung der Nutzungs- und vorzugsweise der Betriebsdaten z.B. dem allgemeinen Parameternamen "Drehzahl" oder "Energieverbrauch" eindeutig seine Bedeutung in einer Maschine zugewiesen werden, ohne die individuelle Maschinentopologie zu kennen.

Bei einer Ausführungsform kann es vorteilhaft sein, wenn das erste Modul oder/und das zweite Modul dazu konfiguriert ist/sind, Daten zu verschlüsseln.

Bei einer Ausführungsform kann mit Vorteil vorgesehen sein, dass das dritte Modul dazu konfiguriert ist, im Falle einer erfolgreichen Überprüfung der Richtigkeit der manipulationsgeschützten Nutzungsdaten, die manipulationsgeschützten Nutzungsdaten elektronisch zu beglaubigen, wobei die elektronische Beglaubigung vorzugsweise einen Zeitstempel aufweist.

Bei einer Ausführungsform kann es vorgesehen sein, dass das dritte Modul dazu konfiguriert ist, im Falle einer fehlgeschlagenen Überprüfung der Richtigkeit der manipulationsgeschützten Nutzungsdaten, die Automatisierungsanlage zu steuern, vorzugsweise adäquat zu steuern. In diesem Fall kann es vorgesehen sein, dass das dritte Modul eine Schnittstelle aufweist, über die es auf die Infrastruktur der Automatisierungsanlage zugreifen und die entsprechenden Maschinen (z.B. Werkzeugmaschinen, Produktionsmaschinen, etc.) und/oder Assets in der Anlage steuern kann. Es kann beispielsweise vorgesehen sein, dass das dritte Modul dazu konfiguriert ist, die entsprechende Maschine abzuschalten oder vorzugsweise jegliche Kommunikation mit dieser Maschine (bis auf weiteres) zu unterbinden.

Bei einer Ausführungsform kann mit Vorteil vorgesehen sein, dass das Distributed-Ledger-Netzwerk ein Blockchain-Netzwerk, vorzugsweise ein privates Blockchain-Netzwerk ist.

Bei einer Ausführungsform kann mit Vorteil vorgesehen sein, dass das Distributed-Ledger-Netzwerk zumindest einen Smart-Contract umfasst, wobei das zweite Modul dazu konfiguriert ist, mit dem zumindest einen Smart-Contract zu kommunizieren, und das dritte Modul dazu konfiguriert ist, die Überprüfung der Richtigkeit mithilfe des zumindest einen Smart-Contracts automatisiert durchzuführen.

Dabei kann es vorgesehen sein, dass das erste Modul dazu eingerichtet ist, Daten von zumindest einer Maschine der Automatisierungsanlage zu erfassen, und das dritte Modul dazu eingerichtet und/oder konfiguriert ist, abhängig von einem Ergebnis der Überprüfung der Richtigkeit der manipulationsgeschützten Nutzungsdaten und mittels des zumindest einen Smart-Contacts Verhalten der zumindest einen Maschine zu beeinflussen. Dabei kann es zweckmäßig sein, wenn der zumindest eine Smart-Contract entsprechende Schnittstelle(n) (z.B. zu der Automatisierungsanlage und zu dem dritten Modul) aufweist. Das dritte Modul kann abhängig von dem Ergebnis der Überprüfung der Richtigkeit der manipulationsgeschützten Nutzungsdaten eine entsprechende Änderung in dem zumindest einen Smart-Contract bewirken. Beim nächsten Aufruf des zumindest einen Smart-Contacts seitens der zumindest einen Maschine kann die zumindest eine Maschine beispielsweise Nutzungsvoraussetzungen überprüfen. Wird der Smart-Contract durch das dritte Modul derart geändert, dass eine der Voraussetzungen nicht erfüllt ist, weil die Maschine beispielsweise nicht gemäß einem in dem Smart-Contract vereinbarten Betriebsmodus benutzt wird, stellt die Maschine dies beim nächsten Aufruf des Smart-Contacts fest und kann deswegen von sich aus die weitere Nutzung verweigern.

Die Aufgabe der Erfindung wird auch mit einem eingangs genannten computerimplementierten Verfahren erfindungsgemäß dadurch gelöst, dass
- durch ein erstes Modul automatisierungsanlagenbezogene Daten erfasst werden, wobei die automatisierungsanlagenbezogenen Daten zumindest Betriebsdaten beispielsweise einer Werkzeug- oder Produktionsmaschine umfassen, wobei die Betriebsdaten in Form einer Zeitreihe vorliegen,- durch das erste Modul aus
   den Betriebsdaten manipulationsgeschützte, vorzugsweise digital signierte Nutzungsdaten erzeugt werden, wobei die Nutzungsdaten in Form einer Reihe von Zeitfenstern (W1, ... W37) einer vorbestimmten Länge gebildet sind,
- durch ein zweites Modul ein Teil der manipulationsgeschützten Nutzungsdaten bestimmt wird,
- durch das zweite Modul eine Prüfsumme von dem mindestens einen Teil der manipulationsgeschützten Nutzungsdaten gebildet wird,
- durch das zweite Modul die Prüfsumme wenigstens einem Knoten eines Distributed-Ledger-Netzwerks übergeben wird,
- durch das zweite Modul die manipulationsgeschützten Nutzungsdaten in einem vorzugsweise sicheren Bereich außerhalb des Distributed-Ledger-Netzwerks hinterlegt werden,
- eine Anfrage durch ein drittes, an dem Distributed Ledger-Netzwerk teilnehmendes Modul erfolgt, die manipulationsgeschützten Nutzungsdaten aus dem vorzugsweise sicheren Bereich zwecks Überprüfung ihrer Richtigkeit und vorzugsweise Information darüber, welches Verfahren zum Bilden der Prüfsumme verwendet wurde, zur Verfügung zu stellen,
- in Reaktion auf die Anfrage die manipulationsgeschützten Nutzungsdaten aus dem vorzugsweise sicheren Bereich zwecks Überprüfung ihrer Richtigkeit und vorzugsweise Information darüber, welches Verfahren zum Bilden der Prüfsumme verwendet wurde, dem dritten Modul zur Verfügung gestellt werden,
- anhand der Prüfsumme die Richtigkeit der manipulationsgeschützten Nutzungsdaten durch das dritte Modul überprüft wird.

Es kann dabei zweckdienlich sein, wenn die Anfrage an eine Instanz gestellt wird, die die manipulationsgeschützten Nutzungsdaten und vorzugsweise die Information darüber, welches Verfahren zum Bilden der Prüfsumme verwendet wurde, zur Verfügung stellen kann. Dabei kann es zweckmäßig sein, wenn die Anfrage von einer weiteren Instanz - von einer prüfenden Instanz, z.B. eine Behörde - gestellt wird, die die Richtigkeit der Manipulation geschützten Nutzungsdaten prüfen kann, d.h. auf die Prüfsumme zugreifen kann. Die Prüfinstanz kann beispielsweise als das vorgenannte dritte Modul ausgebildet sein.

Bei einer Ausführungsform kann es mit Vorteil vorgesehen sein, dass die automatisierungsanlagenbezogenen Daten zusätzlich weitere Daten, beispielsweise Standort-Daten umfassen, wobei die weiteren Daten digital signiert und verschlüsselt werden, ein weiterer Teil der Daten aus den digital signierten und verschlüsselten weiteren Daten gewählt und wenigstens einem Knoten des Distributed-Ledger-Netzwerks übergeben wird, die Richtigkeit des weiteren Teils der Daten, vorzugsweise durch den Dritten / die prüfende Instanz überprüft wird.

Bei einer Ausführungsform kann es vorteilhaft sein, wenn im Falle einer erfolgreichen Überprüfung der Richtigkeit der Daten (der manipulationsgeschützten Nutzungsdaten und vorzugsweise weiterer Daten, z.B. Geolocation etc.), die überprüften Daten elektronisch beglaubigt werden, wobei die elektronische Beglaubigung vorzugsweise einen Zeitstempel aufweist. Diese Beglaubigung kann beispielsweise durch einen digitalen Notariatsdienst in der Blockchain erfolgen.

Bei einer Ausführungsform kann mit Vorteil vorgesehen sein, dass im Falle einer fehlgeschlagenen Überprüfung der Richtigkeit der manipulationsgeschützten Nutzungsdaten, die Automatisierungsanlage - wie oben beschrieben adäquat - zu steuern.

Bei einer Ausführungsform kann es zweckmäßig sein, wenn das Distributed-Ledger-Netzwerk zumindest ein Smart-Contract umfasst, wobei die Überprüfung der Richtigkeit der manipulationsgeschützten Nutzungsdaten und vorzugsweise der weiteren Daten mittels des zumindest einen Smart-Contracts automatisiert durchgeführt wird.

Der zumindest eine Smart-Contract umfasst Regeln, deren Nichteinhaltung zu einer vordefinierten Reaktion seitens des Smart-Contracts führt. Beispielsweise kann der zumindest eine Smart-Contract eine zwangsweise Abschaltung einer Einrichtung/einer Maschine durchsetzen oder bewirken, wenn bestimmte Wartungsarbeiten nicht erbracht wurden, die für einen Versicherungsschutz zwingend sind und für alle Parteien zweifelsfreie Dokumentation des Tatbestandes vorliegt. Auch weitere Maßnahmen sind denkbar. Beispielsweise kann bei einer Nichteinhaltung von Umgebungsbedingungen wie Temperatur, Luftfeuchtigkeit etc. eine offizielle Warnung herausgegeben und/oder die Einrichtung/die Maschine zumindest vorläufig aus dem Kommunikationsnetz ausgeschlossen werden.

Somit kann bei einer Ausführungsform mit Vorteil vorgesehen sein, dass der zumindest eine Smart-Contract abhängig von einem Ergebnis der Überprüfung der Daten ausgeführt wird und mindestens eine als Knoten des Distributed-Ledger-Netzwerks ausgebildete Maschine in Reaktion auf ein Ergebnis der Ausführung des zumindest einen Smart-Contracts eine Aktion durchführt, beispielsweise sich ausgeschaltet oder die Kommunikation zu anderen Maschinen in einem Automatisierungsanlagennetz blockiert.

Die Maschine (oder ein Teil der Maschine oder Anlage) kann beispielsweise den zumindest einen Smart Contract ausführen lassen oder der zumindest eine Smart Contract kann von einer anderen Stelle ausgeführt werden. Anschließend kann die Maschine auf Grundlage des Ergebnisses der Ausführung des Smart-Contracts eine bestimmte Aktion durchführen (z.B. sich auszuschalten oder die Kommunikation einer anderen Maschine zu blockieren).

Zusammenfassend ermöglicht die Erfindung dem Betreiber der Maschine/der Automatisierungsanlage, einen glaubwürdigen und vertrauenswürdigen Nachweis eines regelkonformen Betriebs der Maschine/der Automatisierungsanlage einem Dritten beispielsweise einer staatlichen Behörde gegenüber zu erbringen.

Außerdem erlaubt eine automatische Bereitstellung und Auswertung der Nutzungsdaten (und unter Umständen weiterer Daten, z.B. auch der Betriebsdaten und vorzugsweise der Leistungsdaten) und damit die Steuerung der bestehenden und zukünftigen Finanzprozesse neue, digitale Finanzinstrumente kostengünstig in der Industrie einzusetzen.

Darüber hinaus können Standards und Regeln von Behörden und Regulatoren verlässlich durchgesetzt und für alle Parteien transparent dokumentiert werden. Die Dokumentation ist glaubwürdig bzw. vertrauenswürdig. Die automatische Durchsetzung der staatlichen Regulatorien erlaubt es in Zukunft Produkte mit Bedarf an derartigen Zulassungen schnell und kostengünstig in der Industrie weltweit einzusetzen.

Im Folgenden wird die Erfindung anhand der in den Figuren dargestellten Ausführungsbeispiele näher beschrieben und erläutert. Es zeigen:
- FIG 1: ein System zur Überprüfung der Richtigkeit der Nutzungsdaten einer Automatisierungsanlage,
- FIG 2: durch eine Fräsmaschine erzeugte Daten in Form einer Zeitreihe,
- FIG 3: einen Auditprozess, bei dem Nutzungsdaten einer Automatisierungsanlage überprüft werden,
- FIG 4: ein System zum Kontrollieren einer Automatisierungsanlage mittels eines Smart-Contracts.

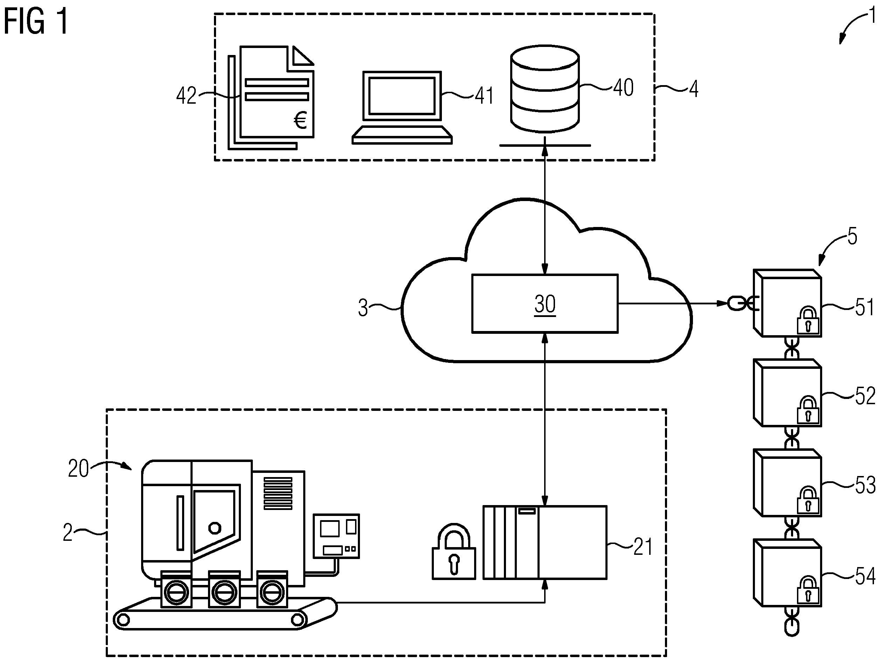

FIG 1 zeigt ein System 1, welches dem erfindungsgemäßen System entspricht. Zur Veranschaulichung sind in der FIG 1 eine Automatisierungsanlage 2, ein Cloud-System 3, ein Maschinenhersteller 4 beziehungsweise Hersteller von industriellen Kontrollsystemen und ein Blockchain-Netzwerk 5 gezeigt.

Der Einfachheit der Darstellung halber ist die Automatisierungsanlage als eine einzige Produktionsmaschine 20 und ein einziges Edge-Gerät 21 umfassende Produktionsanlage 2 dargestellt. Das Edge-Gerät 21 weist eine Cloud-Schnittstelle zu dem Cloud-System 3 auf. Das Edge-Gerät 21 ist ein IoT (Internet of Things) - Gerät.

Die Produktionsanlage 2 ("Shop floor") kann natürlich mehrere Edge-Geräte und mehrere Maschinen umfassen. Nicht selten umfasst eine Automatisierungsanlage ein aus dutzenden oder gar hunderten Maschinen bestehendes Maschinennetzwerk und ein mehrere (möglicherweise auch dutzende oder hunderte) Edge-Geräte umfassendes industrielles Kontrollsystem. Die Maschinen können beispielsweise als Roboter, Werkzeugmaschinen, Fertigungsmaschinen, AGVs (Autonomous Guided Vehicles), usw. ausgebildet sein. Die Maschinen können als IoT-Geräte ausgebildet sein oder solche umfassen.

Das Edge-Gerät 21 ist über eine Maschinenschnittstelle mit der Produktionsmaschine 21 und/oder mit an der Produktionsmaschine 21 angebrachten Sensoren verbunden, um die Produktionsmaschine 21 betreffende Betriebsdaten zu erfassen. Ferner ist das Edge-Gerät 21 dazu konfiguriert auf Basis der Betriebsdaten Nutzungsdaten zu erzeugen. Die Betriebsdaten können beispielsweise Anzahl der Drehteile pro Stunde, Werkstoffe etc. umfassen. Die Nutzungsdaten können beispielsweise Anzahl der Betriebsstunden, Energieverbrauch etc. umfassen.

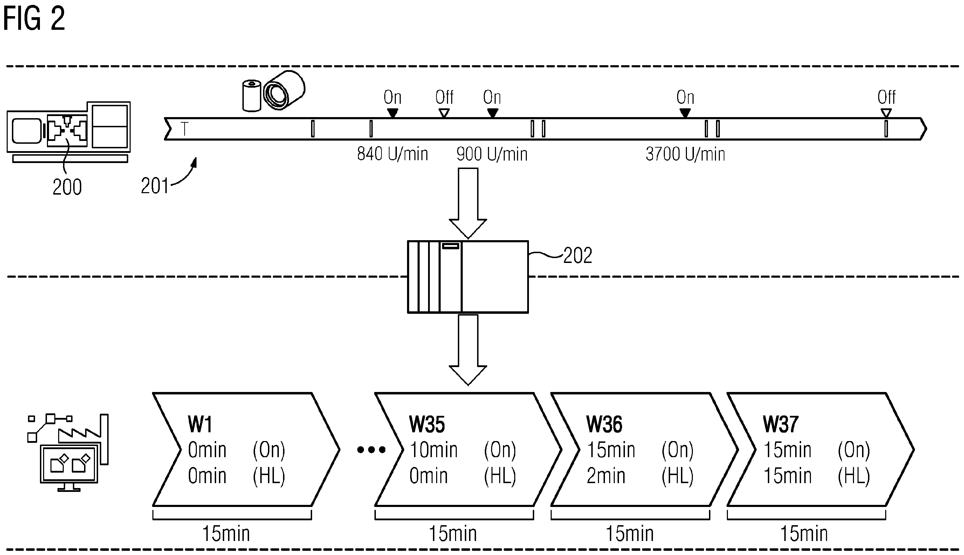

Die Unterschiede zwischen Betriebs- und Nutzungsdaten sind in FIG 2 nun am Beispiel einer Fräsmaschine 200 verdeutlicht.

FIG 2 zeigt durch die Fräsmaschine 200 erzeugte Betriebsdaten in Form einer Zeitreihe 201. Konkret bildet die Zeitreihe 201 beispielhaft ab, wie stark eine Spindel der Fräsmaschine 200 in Abhängigkeit von der Zeit T beansprucht wird. Es ist zu sehen, wann und mit welcher Frequenz ("U/min" - Umdrehungen pro Minute) die Spindel in Betrieb genommen wird - "On", und wann ihr Betrieb beendet wird - "Off". Ein der Fräsmaschine 200 zugeordnetes und mit ihr in Verbindung stehendes Edge-Gerät 202 ist dazu konfiguriert, die Betriebsdaten zu erfassen aus den Betriebsdaten Nutzungsdaten zu erzeugen. Die Nutzungsdaten können z.B. in Form einer Reihe von Zeitfenstern W1, ... W37 einer vorbestimmten Länge (hier 15 Minuten) vorliegen. Jedes der Fenster W1 bis W37 kann Informationen darüber enthalten, wie lang die Spindel innerhalb dieses Zeitfensters in Betrieb ("On") war und wie lang die Spindel unter einer vordefinierten hohen Last ("HL") stand. Dem Fenster W36 ist beispielsweise zu entnehmen, dass die Spindel die ganze Zeit (15 Min) in Betrieb war und davon 2 Minuten unter der hohen Last stand. Es versteht sich, dass die Länge der Fenster nicht auf 15 Minuten beschränkt ist. Diese Länge kann auch von Fenster zu Fenster variieren. Eine Länge des Fensters von 24 Stunden ist durchaus plausibel. Die Last, die als hoch betrachtet wird, kann ebenfalls vordefiniert werden. Beispielsweise kann eine Last von 3700 U/min als hoch erachtet werden.

Obendrein kann das Edge-Gerät 21 dazu eingerichtet sein, seinen Standort und/oder den Standort der Maschine 20 zu ermitteln. Dafür kann das Edge-Gerät 21 beispielsweise eine W3C API aufweisen, wobei der(die) Standort(e) mittels GPS, IP, GSM, WLAN etc. ermitteln werden können.

Außerdem kann das Edge-Gerät 21 dazu eingerichtet sein, KPI (engl. Key Performance Indicator) und weitere produktionsbezogene bzw. -relevante Daten zu erfassen.

Zusammenfassend ist das Edge-Gerät 21 dazu eingerichtet produktionsanlagenbezogene Daten zu erfassen, wobei die produktionsanlagenbezogenen Daten die Nutzungsdaten umfassen und zusätzlich noch weitere Daten, wie z.B. die Standort- und/oder die KPI- und/oder Maschinenrestwertdaten etc. umfassen können. Das Edge-Gerät 21 verfügt über die Fähigkeit Daten digital zu signieren und diese optional zu verschlüsseln.

FIG 1 ist weiterhin zu entnehmen, dass das Edge-Gerät 21 die produktionsanlagenbezogenen Daten über seine Cloud-Schnittstelle an das Cloud-System 3 übermittelt. Der Integrität der produktionsanlagenbezogenen Daten wegen ist das Edge-Gerät 21 überdies dazu konfiguriert, die produktionsanlagenbezogenen Daten digital zu signieren, bevor es diese an das Cloud-System 3 übermittelt. Vorzugsweise kommuniziert das Edge-Gerät 21 dabei mit einem Softwaremodul 30, welches sich in dem Cloud-System 3 befindet.

Das Softwaremodul 30 ist dazu konfiguriert, zumindest einen Teil der digital signierten Nutzungsdaten zu bestimmen und aus dem Teil der digital signierten Nutzungsdaten eine Prüfsumme zu bilden. Vorzugsweise bildet das Softwaremodul 30 die Prüfsumme basierend auf einem kryptographischen Verfahren, um eine sogenannte kryptographische Prüfsumme oder einen kryptographischen Hash oder einen Hashwert zu erzeugen.

Weiters kann das Softwaremodul 30 dazu ausgebildet sein, zumindest einen weiteren Teil der weiteren digital signierten produktionsanlagenbezogenen Daten zu bestimmen und diesen weiteren Teil zu verschlüsseln.

Der Teil der digital signierten Nutzungsdaten, den das Softwaremodul 30 bestimmt aus dem das Softwaremodul 30 eine Prüfsumme, vorzugsweise einen Hashwert bildet, kann beispielsweise abrechnungsrelevante Daten und/oder finanzrelevante Daten (z.B. Leasing-Vertrag-relevante Daten) und/oder rechtlich relevante Daten (z.B. Daten, die für eine Funkzulassung relevant sind) umfassen oder aus diesen Daten bestehen.

Darüber hinaus ist das Softwaremodul 30 dazu eingerichtet und/oder konfiguriert, mit mindestens einem Knoten 51 des Blockchain-Netzwerkes 5 zu kommunizieren, um dem mindestens einem Knoten 51 die Prüfsumme, vorzugsweise den Hashwert des Teils der digital signierten Nutzungsdaten zu übergeben. Der Knoten 51 speichert anschließend die entsprechende Transaktion, die beispielsweise einen Zeitstempel und die Prüfsumme enthält, in Dateien und Blocks und verteilt die Dateien und Blocks an die anderen Knoten 52, 53, 54 weiter.

Außerdem kann das Softwaremodul 30 dazu eingerichtet und/oder konfiguriert sein, den verschlüsselten weiteren Teil der weiteren digital signierten produktionsanlagenbezogenen Daten, z.B. KPIs und/oder die GPS-Koordinaten der Maschine 20 dem mindestens einen Knoten 51 zu übergeben.

Zusammenfassend ist das Softwaremodul 30 dazu eingerichtet, eine Prüfsumme eines bestimmten Teils der digital signierten Nutzungsdaten, beispielsweise des abrechnungsrelevanten Teils der Nutzungsdaten, und optional weitere verschlüsselte Daten dem mindestens einen Knoten 51 zu übergeben. Das Softwaremodul 30 ist befähigt, die empfangenen Daten zu verschlüsseln.

Überdies ist das Softwaremodul 30 dazu konfiguriert und/oder eingerichtet, die digital signierten Nutzungsdaten in einer Datenbank 40 des Maschinen- und/oder Edge-Geräte-Herstellers 4 abzulegen. Auch andere Nutzungsdaten in der Datenbank abgelegt werden. Es kann vorteilhaft sein, beispielsweise die GPS-Daten der Maschinen, den "Heavy Load" Faktor, der sich später gut eignet, überdurchschnittliche Abnutzungen oder Defekte richtig einzuschätzen usw.

Die Nutzungsdaten kann der Hersteller auf einem Dashboard 41 graphisch darstellen und/oder Rechnungen 42 für die Benutzung der Maschine 20 in der Automatisierungsanlage 2 erstellen. Der Maschinenhersteller 4 kann die Maschine 20 an den Besitzer der Automatisierungsanlage 2 z.B. geleast haben.

Das Blockchain-Netzwerk 5 umfasst mindestens noch einen weiteren Knoten. Der Einfachheit der Darstellung halber sind in FIG 1 drei weitere Blockchain-Knoten 52, 53, 54 gezeigt. Das Blockchain-Netzwerk 5 kann natürlich noch viel mehr weitere Knoten umfassen.

Beispielsweise handelt es sich um ein privates Blockchain-Netzwerk 5 oder ein sogenanntes Konsortium Blockchain Netzwerk, bei dem die Teilnahme am Blockchain-Netzwerk 5 auf nur bestimmte Teilnehmer beschränkt ist. Die Teilnehmer können beispielsweise eine Finanz- und/oder eine Zulassungsbehörde umfassen. Im industriellen Umfeld werden beispielsweise private Blockchains eingesetzt, bei welchen das Konsensus-Verfahren innerhalb eines Konsortiums stattfindet, dessen Mitglieder beispielsweise einander oder einer Verwaltungsinstanz bekannt sind oder ein bestimmtes Vertrauensniveau erfüllen.

Das Blockchain-Netzwerk 5 kann allerdings auch als ein öffentliches Blockchain-Netzwerk, wie z.B. Ethereum ausgebildet sein.

An dieser Stelle sei betont, dass sowohl die Automatisierungsanlage 2 als auch das Cloud-System 3 dem Maschinenhersteller 4 gehören können (der Besitzer der Automatisierungsanlage 2, des Cloud-Systems 3 und des Maschinenherstellers 4 kann die gleiche juristische oder natürliche Person sein).

Denkbar ist aber auch, dass die Automatisierungsanlage 2, das Cloud-System 3, und der Maschinenhersteller 4 unterschiedlichen juristischen oder natürlichen Personen gehören.

Darüber hinaus kann das Softwaremodul 30 in dem Edge-Gerät 21 angeordnet sein und über das Cloud-System 3 oder direkt mit dem mindestens einen Knoten 51 des Blockchain-Netzwerkes 5 kommunizieren. Möglich ist auch, dass die Ebene des Maschinen- und/oder Edge-Geräte-Herstellers 4 ganz (Dashboard 41, Rechnungen 42, Datenbank 40) oder teilweise (Datenbank 40) in dem Cloud-System 3 angeordnet sind.

Die Datenbank 40 befindet sich außerhalb des Blockchain-Netzwerkes 5. Dadurch kann verhindert z.B. werden, dass die Blockchain-Netzwerk Teilnehmer ohne eine Zugangsberechtigung die Nutzungsdaten einsehen können.

Dennoch können die Teilnehmer des Blockchain-Netzwerkes 5, die beispielsweise einen oder mehr der weiteren Knoten umfassen, auf die Prüfsumme des Nutzungsdatenauszugs und, wenn vorhanden, auf die verschlüsselten weiteren Daten, z.B. auf die Standort- und/oder Maschinenrestwertdaten zugreifen.

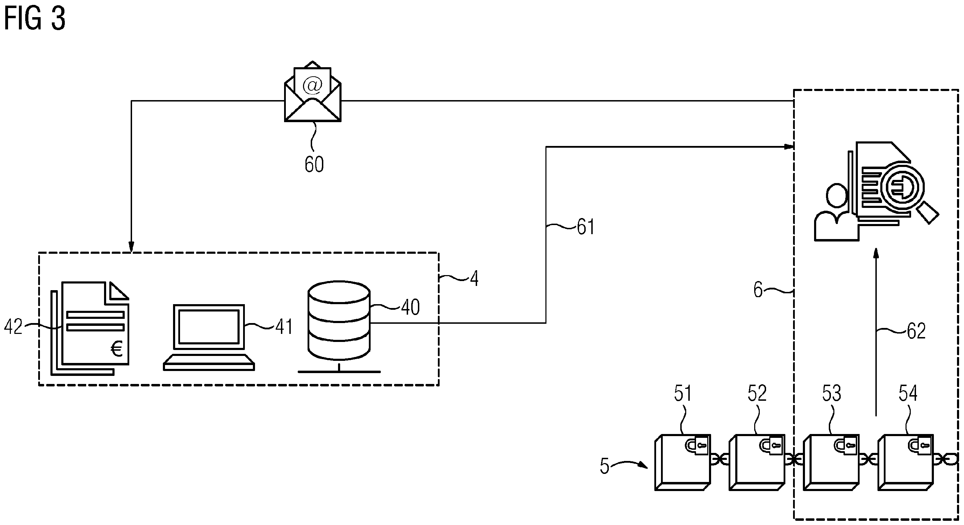

In FIG 3 ist ein Auditprozess veranschaulicht. Bei dem Auditprozess wird die Richtigkeit der Rechnungen 42 überprüft, die der Maschinenhersteller 4 dem Besitzer der Produktionsanlage 2, der die Maschine 20 in dem Shop-Floor der Anlage 20 benutzt, zukommen lässt. Die Überprüfung kann beispielsweise im Auftrag des Besitzers der Produktionsanlage 2 von einem Dritten 6 durchgeführt werden, wobei der Dritte 6 über einen oder mehr Knoten - in dem Fall die Knoten 53, 54 - des Blockchain-Netzwerks 5 verfügen kann aber nicht muss. Der Dritte 6 kann beispielsweise lediglich über einen Zugang und lesenden Zugriff auf irgendeinen der Knoten 51, 52, 53, 54 verfügen.

Zunächst beantragt der Dritte 6 z.B. mittels einer Nachricht 60 beim Maschinenhersteller 40 jene zu überprüfenden Nutzungsdaten, zu denen die Rechnungen vorliegen. Darüber hinaus kann der Auditor 6, falls notwendig eine Charakterisierung des Verfahrens beantragen, mit welchem die Prüfsumme, insbesondere der Hashwert gebildet wurde, der dem mindestens einen Knoten 51 des Blockchain-Netzwerks 5 übergeben wurde. Nachdem dem Antrag des Auditors 6 Folge geleistet wurde, kann dieser eine Prüfsumme, vorzugsweise einen Hashwert aus den zur Verfügung gestellten Nutzungsdaten 61 bilden und sie beziehungsweise ihn mit der beziehungsweise dem in dem Blockchain-Netzwerk 5 hinterlegten Prüfsumme beziehungsweise Hashwert vergleichen.

Das oben Gesagte gilt sinngemäß auch für die Überprüfung von den verschlüsselten Daten, die in dem Knoten 51 vorliegen können. In diesem Fall enthält der Auditor 6 von dem Maschinenhersteller auch einen Schlüssel zur Entschlüsselung der verschlüsselten, dem Knoten 51 übergebenen Daten.

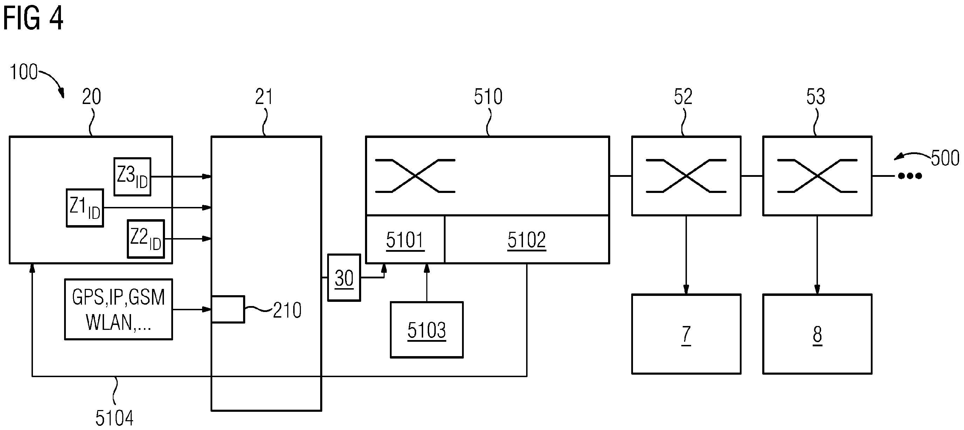

FIG 4 zeigt ein System 100, das beispielsweise als eine Erweiterung des Systems 1 der FIG 1 und 3 ausgebildet sein kann. FIG 4 zeigt die Maschine 20, die beispielsweise drei Sensoren Z1, Z2, Z3 aufweist. Die Daten von den Sensoren Z1, Z2, Z3 werden von dem Edge-Gerät 21 erfasst, wobei das Edge-Gerät 21 darüber hinaus die erfassten Daten transformieren, digital signieren und optional verschlüsseln kann. Wie bereits erwähnt, kann das Edge-Gerät 21 zusätzlich die Geolocation des Betriebsortes z.B. mittels einer W3C Geolocation API 210 ermitteln. Die W3C Geolocation API kann unter Nutzung von GPS, GSM, WLAN, oder IP-Adresse einen entsprechend genauen geografischen Standort ermitteln.

Die Sensoren Z1, Z2, Z3 sind vorzugsweise zertifiziert, so dass bereits der Messwert vertrauenswürdig ist, und verfügen insbesondere über eine ab Werk eindeutige Identifikation ID, die vor Ort an der Maschine 20 oder am Prozess (nicht gezeigt) Betriebsdaten ermitteln. Diese Betriebsdaten genügen vorzugsweise einem standardisierten Daten- oder Maschinenmodell. Damit kann später bei einer Begutachtung oder Prüfung der Betriebsdaten z.B. dem allgemeinen Parameternamen "Drehzahl" oder "Energieverbrauch" eindeutig seine Bedeutung in einer Maschine zugewiesen werden, ohne die individuelle Maschinentopologie zu kennen.

Zusätzlich zu dem Blockchain-Netzwerk 5 der Figuren 1 und 3 umfasst das Blockchain-Netzwerk 500 der FIG 4 zumindest ein Smart-Contract 5101, 5102. Im Smart-Contract können Bedingungen abgebildet werden, unter welchen eine Nutzung der Maschine 20 möglich ist. Beispielsweise können dabei Nutzungsbedingungen, wie z.B. Pay-per-Use-Bedingungen geregelt werden. Somit kann der zumindest eine (auf dem Blockchain-Netzwerk 500 ausführbare) Smart-Contract 5101, 5102 die Beziehung zwischen den Parteien des Systems 100, z.B. zwischen dem Maschinenhersteller 4 und dem Besitzer der Produktionsanlage 2 regeln.

Die Smart-Contracts 5101, 5102 können in dem Knoten 510 erzeugt und gespeichert sein, dem das Softwaremodul 30 die Prüfsumme beziehungsweise den Hashwert und die optional verschlüsselten weiteren Daten übergibt. Denkbar ist aber auch, dass ein anderer, beliebiger Knoten den(die) Smart Contract(s) 5101, 5102 ausführt, da jeder Knoten gleichberechtigt auf alle Blöcke zugreifen kann. Dabei kann das Softwaremodul 30 mit dem(den) Smart-Contract(s) 5101, 5102 kommunizieren. Dabei können die vom Softwaremodul 30 übergebenen Daten mittels des zumindest einen Smart-Contracts 5101, 5102 um eine amtlich beglaubigte und aktuelle Uhrzeit/Datum 5103, z.B. aus dem Zeitserver der PTB (Physikalisch-Technischen Bundesanstalt) ergänzt werden.

Beispielsweise kann das Edge-Device 21 die ID beziehungsweise die Software-Version, Betriebsdaten und Ort der Sensoren Z1, Z2, Z3 erfassen und diese mit den Kriterien "Betriebstüchtig" oder "außer Betrieb" bewerten. Das Ergebnis kann digital signiert, verschlüsselt, z.B. mittels des Edge-Geräts 21 und mittels des Softwaremoduls 30 in das Blockchain-Netzwerk 500 eingetragen werden.

Somit kann das Edge-Device 21 über das zweite Modul 30 (den Haswerte erzeugenden Dienst) mit dem zumindest einen Smart-Contract 5101, 5102 in der Blockchain 5 kommunizieren.

Ein Leasinggeber 7 kann nun die für ihn verschlüsselten Daten in seinem Knoten 52 mit dem zumindest einen Smart-Contract 5101, 5102 auswerten und sich davon überzeugen, zu welchem Zeitpunkt, an welchem Ort und in welchem Zustand die Maschine 20 war. Vorteilhafterweise kann der Leasinggeber die Auswertung digital mit seinen Finanzprozessen verbinden, um eine vollständig digitale Ausführung zu nutzen.

Außerdem kann diese Auswertung einem Regulator 8 gegenüber, auch Jahre später, glaubwürdig nachgewiesen werden, unter Verweis auf Daten, die auch für den Regulator 8 in dessen Knoten 53 zugänglich sind.

Wenn beispielsweise das Edge-Device 21 nur die ID/Software-Version und der Ort digital signiert und verschlüsselt und an das Softwaremodul 30 übermittelt, welches diese Daten in das Blockchain-Netzwerk 500 einträgt, dann kann der zumindest eine Smart-Contract 5101, 5102 automatisch und vorzugsweise laufend alle eingetragenen Datensätze durch Vergleich mit dem Orakel des Maschinenanbieters 4 ("diese SW-Version ist zu diesem Zeitpunkt in diesem Land regelkonform") überprüfen und die Nutzung einer nichtkonformen Maschine durch eine entsprechende Rückmeldung an das Edge-Device 21 unterbinden.

Vorteilhafterweise kann dies einer Behörde 8 gegenüber, auch Jahre später, glaubwürdig nachgewiesen werden, unter Verweis auf Daten, die auch für die Behörde 8 in ihrem Knoten 53 zugänglich sind.

Zusätzlich oder alternativ kann das Edge-Device 21 seine ID/Software-Version und einen Ort, an dem es sich befindet, digital signieren und vorzugsweise verschlüsselt in die Blockchain 5 über das zweite Modul 30 eintragen.

Der zumindest eine Smart-Contract 5101, 5102 kann laufend und automatisch alle eingetragenen Datensätze durch Vergleich mit dem Orakel des Geräteanbieters 4 ("diese Software-Version ist zu diesem Zeitpunkt in diesem Land regelkonform") überprüfen und die Nutzung eines nichtkonformen Gerätes durch Information an das Edge-Device 21 unterbinden. Diese Umsetzung kann einer Behörde gegenüber, auch Jahre später, glaubwürdig nachgewiesen werden, unter Verweis auf Daten, die auch für die Behörde in dessen Knoten 53, 53, 54 "Behörde" 6, 7 oder 8 der Blockchain 5 zugänglich sind.

Überdies kann auch die Maschine 20 selbst einen Knoten des Blockchain-Netzwerks 500 bilden. Dabei kann der zumindest eine Smart-Contract 5101, 5102 abhängig von einem Ergebnis der Überprüfung der Daten ausgeführt werden. In Reaktion auf ein Ergebnis der Ausführung des zumindest einen Smart-Contracts 5101, 5102 kann die Maschine 20, die mit dem(n) Smart-Contract(s) kommunizieren kann, eine entsprechende Aktion durchführen, beispielsweise sich ausgeschaltet oder die Kommunikation zu anderen Maschinen in einem Automatisierungsanlagennetz blockieren (Pfeil 5104 in FIG 4). Das Ergebnis der Ausführung des(r) Smart-Contracts 5101, 5102 hängt davon ab, ob die dort festgelegten Regularien eingehalten werden oder nicht. Dies kann muss aber nicht mithilfe des Edge-Geräts 21 erfolgen.

Vorteilhaft dabei ist, dass die Massendaten des industriellen Prozesses (die Betriebsdaten) vor Ort an der Anlage 2 bleiben können. In das Distributed-Ledger-Netzwerk 5, z.B. in die Blockchain werden nur jene Daten übertragen, die direkt zur schnellen Auswertung durch einen Regulator oder Behörde 6, 7, 8 relevant sind (z.B. "Gerät ist konform") bzw. welche helfen im Streitfall die Richtigkeit historischer Nutzungs- und vorzugsweise der Betriebsdaten zu belegen (z.B. wöchentliches Hash auf die vor Ort gespeicherten Nutzungs- und vorzugsweise der Betriebsdaten).

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale auch bei dem System zum Einsatz kommen bzw. dieses vervollständigen und *vice versa.*

## Patentansprüche

1. System umfassend ein erstes Modul (21), ein zweites Modul (30) und ein drittes Modul (6,7,8), wobei das erste Modul (21) dazu konfiguriert ist,
- automatisierungsanlagenbezogene Daten zu erfassen, wobei die automatisierungsanlagenbezogenen Daten zumindest Betriebsdaten umfassen, wobei die Betriebsdaten in Form einer Zeitreihe (201) vorliegen,
- aus den Betriebsdaten manipulationsgeschützte Nutzungsdaten in Form einer Reihe von Zeitfenstern (W1, ... W37) einer vorbestimmten Länge zu erzeugen, und
- die manipulationsgeschützten Nutzungsdaten an das zweite Modul (30) zu übermitteln, wobei
das zweite Modul (30) dazu konfiguriert ist,
- zumindest einen Teil der manipulationsgeschützten Nutzungsdaten zu bestimmen,
- eine Prüfsumme von dem mindestens einen Teil der manipulationsgeschützten Nutzungsdaten zu bilden,
- die Prüfsumme wenigstens einem Knoten (51) eines Distributed-Ledger-Netzwerks (5) zu übergeben, und
- die manipulationsgeschützten Nutzungsdaten in einem Bereich (40) außerhalb des Distributed-Ledger-Netzwerks (5) zu hinterlegen, wobei
das dritte Modul (6,7,8) an dem Distributed-Ledger-Netzwerk (5) teilnimmt und dazu konfiguriert ist,
- die manipulationsgeschützten Nutzungsdaten (61) auf Anfrage aus dem Bereich (40) zu erhalten und
- anhand der Prüfsumme die Richtigkeit der manipulationsgeschützten Nutzungsdaten zu überprüfen.

2. System nach Anspruch 1, wobei die automatisierungsanlagenbezogenen Daten zusätzlich weitere Daten, beispielsweise Standort-Daten umfassen, wobei das erste Modul (21) dazu konfiguriert ist, die weiteren Daten digital zu signieren und zu verschlüsseln und diese digital signierten und verschlüsselten weiteren Daten an das zweite Modul (30) zu übermitteln, wobei das zweite Modul (30) dazu konfiguriert ist, zumindest einen weiteren Teil der digital signierten und verschlüsselten weiteren Daten wenigstens einem Knoten (51) des Distributed-Ledger-Netzwerks (5) zu übergeben, wobei das drittel Modul (6,7,8) dazu konfiguriert ist, die Richtigkeit des weiteren Teils der Daten zu überprüfen.

3. System nach Anspruch 1 oder 2, wobei die Betriebsdaten vertrauenswürdig sind, insbesondere sind die Betriebsdaten von an Werkzeugmaschinen (20,200) einer Automatisierungsanlage (2) angeordneten Sensoren (Z1,Z2,Z3) erfasst.

4. System nach einem der Ansprüche 1 bis 3, wobei das erste Modul (21) oder/und das zweite Modul (30) dazu konfiguriert ist/sind, Daten zu verschlüsseln.

5. System nach einem der Ansprüche 1 bis 4, wobei das dritte Modul (6,7,8) dazu konfiguriert ist, im Falle einer erfolgreichen Überprüfung der Richtigkeit der manipulationsgeschützten Nutzungsdaten, die manipulationsgeschützten Nutzungsdaten elektronisch zu beglaubigen, wobei die elektronische Beglaubigung vorzugsweise einen Zeitstempel (5103) aufweist.

6. System nach einem der Ansprüche 1 bis 5, wobei das dritte Modul dazu konfiguriert ist, im Falle einer fehlgeschlagenen Überprüfung der Richtigkeit der manipulationsgeschützten Nutzungsdaten, die Automatisierungsanlage zu steuern.

7. System nach einem der Ansprüche 1 bis 6, wobei das Distributed-Ledger-Netzwerk (5) ein Blockchain-Netzwerk, vorzugsweise ein privates Blockchain-Netzwerk (5) ist.

8. System nach einem der Ansprüche 1 bis 7, wobei das Distributed-Ledger-Netzwerk (5) zumindest einen Smart-Contract (5101,5102) umfasst, wobei das zweite Modul (30) dazu konfiguriert ist, mit dem zumindest einen Smart-Contract (5101, 5102) zu kommunizieren, und das dritte Modul (6,7,8) dazu konfiguriert ist, die Überprüfung der Richtigkeit mithilfe des zumindest einen Smart-Contracts (5101,5102) automatisiert durchzuführen.

9. System nach Anspruch 8, wobei das erste Modul (21) dazu eingerichtet ist, Daten von zumindest einer Maschine (20, 200) einer Automatisierungsanlage (2) zu erfassen, und das dritte Modul (6,7,8) dazu eingerichtet und/oder konfiguriert ist, abhängig von einem Ergebnis der Überprüfung der Richtigkeit der manipulationsgeschützten Nutzungsdaten und mittels des zumindest einen Smart-Contacts (5101,5102) Verhalten der zumindest eine Maschine (20,200) zu beeinflussen, beispielsweise auszuschalten und/oder von einer Kommunikation in einem Automatisierungsanlagennetz auszuschließen.

10. System nach einem der Ansprüche 1 bis 8, wobei die automatisierungsanlagenbezogenen Daten Leistungsdaten umfassen, wobei das erste Modul dazu konfiguriert ist, basierend auf den Betriebs- und Leistungsdaten manipulationsgeschützte Nutzungsdaten zu erzeugen.

11. System nach Anspruch 10, wobei das erste Modul dazu konfiguriert ist, die Betriebsdaten und die Leistungsdaten innerhalb einer Automatisierungsanlage (2) sicher abzulegen.

12. Computerimplementiertes Verfahren zur Überprüfung von Nutzungsdaten einer Automatisierungsanlage, wobei
- durch ein erstes Modul (21) automatisierungsanlagenbezogene Daten erfasst werden, wobei die automatisierungsanlagenbezogenen Daten zumindest Betriebsdaten umfassen, wobei die Betriebsdaten in Form einer Zeitreihe (201) vorliegen,
- durch das erste Modul (21) aus den Betriebsdaten manipulationsgeschützte, vorzugsweise digital signierte Nutzungsdaten erzeugt werden, wobei die Nutzungsdaten in Form einer Reihe von Zeitfenstern (W1, ... W37) einer vorbestimmten Länge gebildet sind,
- durch ein zweites Modul (30) zumindest ein Teil der manipulationsgeschützten Nutzungsdaten bestimmt wird,
- durch das zweite Modul (30) eine Prüfsumme von dem mindestens einen Teil der manipulationsgeschützten Nutzungsdaten gebildet wird,
- durch das zweite Modul (30) die Prüfsumme wenigstens einem Knoten (51) eines Distributed-Ledger-Netzwerks (5) übergeben wird,
- durch das zweite Modul (30) die manipulationsgeschützten Nutzungsdaten in einem Bereich (40) außerhalb des Distributed-Ledger-Netzwerks (5) hinterlegt werden,
- eine Anfrage (60) durch ein drittes, an dem Distributed-Ledger-Netzwerk (5) teilnehmendes Modul (6,7,8) erfolgt, die manipulationsgeschützten Nutzungsdaten (61) aus dem vorzugsweise sicheren Bereich (40) zwecks Überprüfung ihrer Richtigkeit und vorzugsweise Information darüber, welches Verfahren zum Bilden der Prüfsumme verwendet wurde, zur Verfügung zu stellen,
- in Reaktion auf die Anfrage (60) die manipulationsgeschützten Nutzungsdaten (61) aus dem vorzugsweise sicheren Bereich (40) zwecks Überprüfung ihrer Richtigkeit und vorzugsweise Information darüber, welches Verfahren zum Bilden der Prüfsumme verwendet wurde, dem dritten Modul (6,7,8) zur Verfügung gestellt werden,
- anhand der Prüfsumme die Richtigkeit der manipulationsgeschützten Nutzungsdaten (61) durch das dritte Modul (6,7,8) überprüft wird.

13. Verfahren nach Anspruch 12, wobei die automatisierungsanlagenbezogenen Daten zusätzlich weitere Daten, beispielsweise Standort-Daten umfassen, wobei
- die weiteren Daten digital signiert und verschlüsselt werden,
- ein weiterer Teil der Daten aus den digital signierten und verschlüsselten weiteren Daten gewählt und wenigstens einem Knoten (51) des Distributed-Ledger-Netzwerks (5) übergeben wird,
- die Richtigkeit des weiteren Teils der Daten überprüft wird.

14. Verfahren nach Anspruch 12 oder 13, wobei im Falle einer erfolgreichen Überprüfung der Richtigkeit der manipulationsgeschützten Nutzungsdaten und vorzugsweise der weiteren Daten, die manipulationsgeschützten Nutzungsdaten und vorzugsweise die weiteren Daten elektronisch beglaubigt werden, wobei die elektronische Beglaubigung vorzugsweise einen Zeitstempel (5103) aufweist.

15. Verfahren nach einem der Ansprüche 12 bis 14, wobei im Falle einer fehlgeschlagenen Überprüfung der Richtigkeit der manipulationsgeschützten Nutzungsdaten, die Automatisierungsanlage zu steuern.

16. Verfahren nach einem der Ansprüche 12 bis 15, wobei das Distributed-Ledger-Netzwerk (5) zumindest ein Smart-Contract (5101,5102) umfasst, wobei
- die Überprüfung der Richtigkeit der manipulationsgeschützten Nutzungsdaten und vorzugsweise der weiteren Daten mittels des zumindest einen Smart-Contracts (5101, 5102) automatisiert durchgeführt wird.

17. Verfahren nach Anspruch 16, wobei der zumindest eine Smart-Contract (5101,5102) abhängig von einem Ergebnis der Überprüfung der Daten ausgeführt wird und mindestens eine als Knoten des Distributed-Ledger-Netzwerks (5) ausgebildete Maschine (20) in Reaktion auf ein Ergebnis der Ausführung des zumindest einen Smart-Contracts (5101,5102) eine Aktion durchführt, beispielsweise sich ausgeschaltet oder die Kommunikation zu anderen Maschinen in einem Automatisierungsanlagennetz blockiert.

## Claims

1. System comprising a first module (21), a second module (30) and a third module (6,7,8), wherein
the first module (21) is configured to
- acquire automation plant-related data, wherein the automation plant-related data comprises at least operating data, wherein the operating data is present in the form of a time series (201),
- generate manipulation-proof usage data in the form of a series of time windows (W1, ... W37) of a predetermined length from the operating data, and
- transmit the manipulation-proof usage data to the second module (30), wherein
the second module (30) is configured to
- determine at least a part of the manipulation-proof usage data,
- form a checksum from the at least one part of the manipulation-proof usage data,
- transfer the checksum to at least one node (51) of a distributed ledger network (5), and
- store the manipulation-proof usage data in an area (40) outside the distributed ledger network (5), wherein
the third module (6,7,8) participates in the distributed ledger network (5) and is configured to
- receive the manipulation-proof usage data (61) from the area (40) on request, and
- check the correctness of the manipulation-proof usage data on the basis of the checksum.

2. System according to claim 1, wherein the automation plant-related data additionally comprises further data, for example location data, wherein the first module (21) is configured to digitally sign and encrypt the further data and to transmit said digitally signed and encrypted further data to the second module (30), wherein the second module (30) is configured to transfer at least a further part of the digitally signed and encrypted further data to at least one node (51) of the distributed ledger network (5), wherein the third module (6,7,8) is configured to check the correctness of the further part of the data.

3. System according to claim 1 or 2, wherein the operating data is trustworthy, in particular the operating data is acquired by sensors (Z1,Z2,Z3) arranged on machine tools (20,200) of an automation plant (2).

4. System according to one of claims 1 to 3, wherein the first module (21) or/and the second module (30) is/are configured to encrypt data.

5. System according to one of claims 1 to 4, wherein the third module (6,7,8) is configured to authenticate the manipulation-proof usage data electronically in the event of a successful verification of the correctness of the manipulation-proof usage data, wherein the electronic authentication preferably includes a timestamp (5103).

6. System according to one of claims 1 to 5, wherein the third module is configured to control the automation plant in the event of a failed verification of the correctness of the manipulation-proof usage data.

7. System according to one of claims 1 to 6, wherein the distributed ledger network (5) is a blockchain network, preferably a private blockchain network (5).

8. System according to one of claims 1 to 7, wherein the distributed ledger network (5) comprises at least one smart contract (5101,5102), wherein the second module (30) is configured to communicate with the at least one smart contract (5101, 5102), and the third module (6,7,8) is configured to perform the verification of the correctness automatically with the aid of the at least one smart contract (5101,5102).

9. System according to claim 8, wherein the first module (21) is set up to acquire data from at least one machine (20, 200) of an automation plant (2), and the third module (6,7,8) is set up and/or configured to influence the behaviour of the at least one machine (20,200), for example shut it down and/or exclude it from a communication in an automation plant network, as a function of a result of the verification of the correctness of the manipulation-proof usage data and by means of the at least one smart contract (5101,5102).

10. System according to one of claims 1 to 8, wherein the automation plant-related data comprises performance data, wherein the first module is configured to generate manipulation-proof usage data based on the operating data and performance data.

11. System according to claim 10, wherein the first module is configured to store the operating data and the performance data securely within an automation plant (2).

12. Computer-implemented method for checking usage data of an automation plant, wherein
- automation plant-related data is acquired by a first module (21), wherein the automation plant-related data comprises at least operating data, wherein the operating data is present in the form of a time series (201),
- manipulation-proof, preferably digitally signed usage data is generated by the first module (21) from the operating data, wherein the usage data is formed in the form of a series of time windows (W1, ... W37) of a predetermined length,
- at least one part of the manipulation-proof usage data is determined by a second module (30),
- a checksum is formed from the at least one part of the manipulation-proof usage data by the second module (30),
- the checksum is transferred by the second module (30) to at least one node (51) of a distributed ledger network (5),
- the manipulation-proof usage data is stored by the second module (30) in an area (40) outside the distributed ledger network (5),
- a request (60) is issued by a third module (6,7,8) participating in the distributed ledger network (5) to make available the manipulation-proof usage data (61) from the preferably secure area (40) for the purpose of verifying its correctness and preferably information about which method was used to form the checksum,
- in response to the request (60), the manipulation-proof usage data (61) is made available to the third module (6,7,8) from the preferably secure area (40) for the purpose of verifying its correctness, as well as preferably information about which method was used to form the checksum,
- the correctness of the manipulation-proof usage data (61) is verified by the third module (6,7,8) on the basis of the checksum.

13. Method according to claim 12, wherein the automation plant-related data additionally comprises further data, for example location data, wherein
- the further data is digitally signed and encrypted,
- a further part of the data is chosen from the digitally signed and encrypted further data and transferred to at least one node (51) of the distributed ledger network (5),
- the correctness of the further part of the data is checked.

14. Method according to claim 12 or 13, wherein in the event of a successful verification of the correctness of the manipulation-proof usage data and preferably of the further data, the manipulation-proof usage data and preferably the further data are electronically authenticated, wherein the electronic authentication preferably includes a timestamp (5103) .

15. Method according to one of claims 12 to 14, wherein the automation plant is controlled in the event of a failed verification of the correctness of the manipulation-proof usage data.

16. Method according to one of claims 12 to 15, wherein the distributed ledger network (5) comprises at least one smart contract (5101,5102), wherein
- the verification of the correctness of the manipulation-proof usage data and preferably of the further data is performed automatically by means of the at least one smart contract (5101, 5102).

17. Method according to claim 16, wherein the at least one smart contract (5101,5102) is executed as a function of a result of the verification of the data and at least one machine (20) embodied as a node of the distributed ledger network (5) performs an action in response to a result of the execution of the at least one smart contract (5101,5102), for example shuts itself down or blocks the communication with other machines in an automation plant network.

## Revendications

1. Système comprenant un premier module (21), un deuxième module (30) et un troisième module (6, 7, 8), dans lequel le premier module (21) est configuré pour
- saisir des données se rapportant à des installations d'automatisation, dans lequel les données se rapportant à des installations d'automatisation comprennent au moins des données de fonctionnement, les données de fonctionnement se présentant sous la forme d'une série (201) temporelle,
- produire, à partir des données de fonctionnement, des données d'utilisation protégées d'une manipulation, sous la forme d'une série de créneaux (W1, ... W37) temporels d'une longueur déterminée à l'avance, et
- transmettre les données d'utilisation protégées d'une manipulation au deuxième module (30), dans lequel le deuxième module (30) est configuré pour
- déterminer au moins une partie des données d'utilisation protégées d'une manipulation,
- former une somme de contrôle par la au moins une partie des données d'utilisation protégées d'une manipulation,
- donner la somme de contrôle à au moins un noeud (51) d'un réseau (5) distributed-ledger, et
- mettre les données d'utilisation protégées d'une manipulation dans une partie (40) à l'extérieur du réseau (5) distributed-ledger, dans lequel
le troisième module (6, 7, 8) participe au réseau (5) distributed-ledger et est configuré pour
- obtenir de la partie (40), sur demande, les données (61) d'utilisation protégées d'une manipulation, et
- contrôler, à l'aide de la somme de contrôle, l'exactitude des données d'utilisation protégées d'une manipulation.

2. Système suivant la revendication 1, dans lequel les données se rapportant à des installations d'automatisation comprennent supplémentairement d'autres données, par exemple des données d'emplacement, dans lequel le premier module (21) est configuré pour signer et chiffrer numériquement les autres données et transmettre au deuxième module (30) ces autres données signées et chiffrées numériquement, dans lequel le deuxième module (30) est configuré pour donner au moins une autre partie des autres données signées et chiffrées numériquement à au moins un noeud (51) du réseau (5) distributed-ledger, le troisième module (6, 7, 8) étant configuré pour contrôler l'exactitude de l'autre partie des données.

3. Système suivant la revendication 1 ou 2, dans lequel les données de fonctionnement sont dignes de confiance, en particulier les données de fonctionnement sont saisies par des capteurs (Z1, Z2, Z3) montés sur des machines outils (20, 200) d'une installation (2) d'automatisation.

4. Système suivant l'une des revendications 1 à 3, dans lequel le premier module (21) ou/et le deuxième module (30) est/sont configuré(s) pour chiffrer des données.

5. Système suivant l'une des revendications 1 à 4, dans lequel le troisième module (6, 7, 8) est configuré pour, dans le cas d'un contrôle réussi de l'exactitude des données d'utilisation protégées d'une manipulation, certifier électroniquement les données d'utilisation protégées d'une manipulation, la certification électronique ayant, de préférence, une estampille (5103) temporelle.

6. Système suivant l'une des revendications 1 à 5, dans lequel le troisième module est configuré pour, dans le cas de l'échec du contrôle de l'exactitude des données d'utilisation protégées d'une manipulation, commander l'installation d'automatisation.

7. Système suivant l'une des revendications 1 à 6, dans lequel le réseau (5) distributed-ledger est un réseau de blockchain, de préférence un réseau (5) de blockchain privé.

8. Système suivant l'une des revendications 1 à 7, dans lequel le réseau (5) distributed-ledger comprend au moins un smart-contract (5101, 5102), dans lequel le deuxième module (30) est configuré pour communiquer avec le au moins un smart-contract (5101, 5102) et le troisième module (6, 7, 8) est configuré pour effectuer de manière automatisée le contrôle de l'exactitude, à l'aide du au moins un smart-contract (5101, 5102).

9. Système suivant la revendication 8, dans lequel le premier module (21) est agencé pour saisir des données d'au moins une machine (20, 200) d'une installation (2) d'automatisation, et le troisième module (6, 7, 8) est agencé et/ou configuré pour, en fonction du résultat du contrôle de l'exactitude des données d'utilisation protégées par une manipulation et au moyen du au moins un smart-contact (5101, 5102), influencer le comportement de la au moins une machine (20, 200), par exemple la mettre hors circuit et/ou l'exclure d'une communication dans un réseau de l'installation d'automatisation.

10. Système suivant l'une des revendications 1 à 8, dans lequel les données se rapportant à des installations d'automatisation sont des données de puissance, dans lequel le premier module est configuré pour produire, sur la base des données de fonctionnement et de puissance, des données d'utilisation protégées d'une manipulation.

11. Système suivant la revendication 10, dans lequel le premier module est configuré pour mettre, de manière fiable, les données de fonctionnement et les données de puissance dans une installation (2) d'automatisation.

12. Procédé mis en oeuvre par ordinateur de contrôle de données d'utilisation d'une installation d'automatisation, dans lequel
- on saisit, par un premier module (21), des données se rapportant à des installations d'automatisation, dans lequel les données se rapportant à des installations d'automatisation comprennent au moins des données de fonctionnement, dans lequel les données de fonctionnement se présentent sous la forme d'une série (201) temporelle,
- par le premier module (21), on produit, à partir des données de fonctionnement, des données d'utilisation protégées d'une manipulation, de préférence signées numériquement, dans lequel les données d'utilisation sont formées sous la forme d'une série de créneaux (W1, ... W37) temporels d'une longueur déterminée à l'avance,
- par le deuxième module (30), on détermine au moins une partie des données d'utilisation protégées d'une manipulation,
- par le deuxième module (30), on forme une somme de contrôle de la au moins une partie des données d'utilisation protégées d'une manipulation,
- par le deuxième module (30), on donne la somme de contrôle à au moins un noeud (51) d'un réseau (5) distributed-ledger,
- par le deuxième module (30), on met les données d'utilisation protégées d'une manipulation dans une partie (40) à l'extérieur du réseau (5) distributed-ledger,
- une demande (60) a lieu, par un tiers, au module (6, 7, 8) participant au réseau (5) distributed-ledger, de mettre à disposition les données (61) d'utilisation protégées d'une manipulation à partir de la partie (40), de préférence sécurisée, en vue d'un contrôle de leur exactitude et d'avoir, de préférence de l'information sur le procédé, qui a été utilisé pour la formation de la somme de contrôle,
- en réaction à la demande (60), on met à disposition du troisième module (6, 7, 8) les données (61) protégées d'une manipulation, à partir de la partie (40), de préférence sécurisée, en vue du contrôle de leur exactitude et de préférence d'avoir une information sur le procédé, qui a été utilisé pour former la somme de contrôle,
- à l'aide de la somme de contrôle, on contrôle par le troisième module (6, 7, 8) l'exactitude des données (61) d'utilisation protégées d'une manipulation.

13. Procédé suivant la revendication 12, dans lequel les données se rapportant à des installations d'automatisation comprennent supplémentaires d'autres données, par exemple des données d'emplacement, dans lequel
- on signe et on chiffre numériquement les autres données,
- on sélectionne une autre partie des données parmi les autres données signées et chiffrées numériquement et les donne à au moins un noeud (51) du réseau (5) distributed-ledger,
- on contrôle l'exactitude de l'autre partie des données.

14. Procédé suivant la revendication 12 ou 13, dans lequel, dans le cas d'un contrôle réussi de l'exactitude des données d'utilisation protégées d'une manipulation et, de préférence des autres données, on certifie électroniquement les données d'utilisation protégées d'une manipulation et, de préférence les autres données, la certification électronique ayant, de préférence une estampille (5103) temporelle.

15. Procédé suivant l'une des revendications 12 à 14, dans lequel, dans le cas où le contrôle de l'exactitude des données d'utilisation protégées d'une manipulation ne réussit pas, on commande l'installation d'automatisation.

16. Procédé suivant l'une des revendications 12 à 15, dans lequel le réseau (5) distributed-ledger comprend au moins un smart-contract (5101, 5102), dans lequel
- on effectue, de manière automatisée, le contrôle de l'exactitude des données d'utilisation protégées d'une manipulation et, de préférence des autres données, à l'aide du au moins un smart-contract (5101, 5102).

17. Procédé suivant la revendication 16, dans lequel on exécute le au moins un smart-contract (5101, 5102), en fonction du résultat du contrôle des données et au moins une machine (20), constituée sous la forme d'un noeud du réseau (5) distributed-ledger, effectue, en réaction au résultat de l'exécution du au moins un smart-contract (5101, 5102), une action, par exemple se met hors circuit ou bloque la communication à d'autres machines dans un réseau d'installations d'automatisation.
